# EUROPEAN PATENT SPECIFICATION

(11) **EP 2 454 005 B1**
(45) Date of publication and mention of the grant of the patent: **01.04.2015**
(21) Application number: 10800111.6
(22) Date of filing: 04.06.2010
(51) Int. Cl.: B01D 53/50, B01D 53/18, B01D 53/78, B01D 53/79

(54) **METHOD AND DEVICE FOR PURIFYING GASES BY ABSORPTION**
VERFAHREN UND VORRICHTUNG ZUR REINIGUNG VON GASEN DURCH ABSORPTION
PROCÉDÉ ET DISPOSITIF DE PURIFICATION DE GAZ PAR ABSORPTION

(30) Priority: 14.07.2009 SE 0950559
(43) Date of publication of application: 23.05.2012
(60) Divisional application: 15155320.3
(73) Proprietor: Marketing I Konsulting Per Anders Brattemo, 30-146 Krakow (PL)
(72) Inventor: BRATTEMO, Per Anders, PL-30-146 Krakow (PL)
(74) Representative: Örtenblad, Johan Tore
(86) International application number: PCT/SE2010/050619
(87) International publication number: WO 2011/008155

(56) References cited:
- EP-B1- 0 189 534
- WO-A1-03/004137
- WO-A1-03/004137
- WO-A1-03/004137
- WO-A1-2005/007274
- WO-A1-2005/007274
- WO-A1-2005/007274
- WO-A1-2007/057573
- WO-A1-2008/121683
- WO-A1-2008/121683
- WO-A1-2008/121683
- GB-A- 357 599
- US-A- 5 759 505
- US-A1- 2004 112 215

## Description

The present invention relates to a method and a device for purifying gases containing gaseous pollutants and/or pollutants in the form of particles.

The method of the invention is particularly useful for the separation of sulfur dioxide and particles from flue gases from combustion of fossil fuels.

Conventionally, several different technologies are used for such flue gas purification, for example venturi scrubbers, bubble beds and spray towers, in which the flue gases are exposed to contact with a liquid absorbent, for example water containing an active ingredient such as lime, whereby the sulfur dioxide and the particles pass over to the absorbent. It is important to maximize the contact surface and time between the flue gases and the absorbent in the purification device for maximum yield.

Spray towers are often reliable, but since the drops of absorbent produced in the spray tower are comparatively large, they can only separate a limited part of the sulfur dioxide and the particles from the flue gases, if not built in a number of spraying levels. Therefore, spray towers tend to be very large and therefore expensive at large throughput volumes and high levels of separation.

Venturi scrubbers, on the other hand, produce finer drops that thereby separate a larger part of sulfur dioxide. However, they are expensive to operate. Bubble beds are also expensive to operate, since relatively large amounts of energy are required, for instance in the form of supplied stirring action in order to obtain a good yield, in combination with such beds often having to be quite high.

Thus, there is a need for a way to purify gases from gaseous pollutants and/or pollutants in the form of particles, which is both cheap and efficient, and which does not require all too bulky equipment, especially when it comes to purification of flue gases from fossil fuel combustion.

Moreover, when purifying sulfur dioxide from flue gases in scrubbers, using for example lime as the absorbent, it is necessary to add an oxidant, most often air, in order to oxidize the reaction products in the absorbent. This constitutes a problem for purifying flue gases from a so called oxyfuel burner, i.e. an industrial burner or power plant burner which is driven with an oxidant comprising more oxygen and less nitrogen than air. In general, flue gases from such burners comprise a large part carbon dioxide and water vapour, and subsequent carbon dioxide separation steps are in such cases often used. In case air is added to the absorbent, problems do however arise as any subsequent carbon dioxide separation steps must treat the nitrogen added via the air, which nitrogen then is present in the purified gases. Thus, a cost efficient method would be desirable that does not lead to nitrogen gas being added in large quantities to the purified gases.

The present invention solves these problems.

Thus, the present invention relates to a method for purifying gas, and is characterised in that several venturi tubes are arranged next to each other in a plate which is caused to comprise an upper surface, and in that the gas in a first step is brought through the venturi tubes in a direction against the direction of gravity; and in a second step is bubbled through a liquid bed of absorbent that is caused to be arranged on top of the upper surface.

Scrubbers of similar design (upflowing gas through a plate with tubular perforations, carrying a liquid bed) are disclosed in Prior Art Documents WO2005007274, WO2008121683 and WO03004137, as well as in GB357599 and US5759505, wherein the perforations show constrictions.

The invention will now be described in detail, with reference to exemplifying embodiments of the invention and to the appended drawings, in which:
Figure 1 is a cross-sectional view of a device according to the present invention; and
Figure 2 is a detail cross-sectional view of a venturi plate according to the present invention. Both figures share the same reference numerals for the same parts.

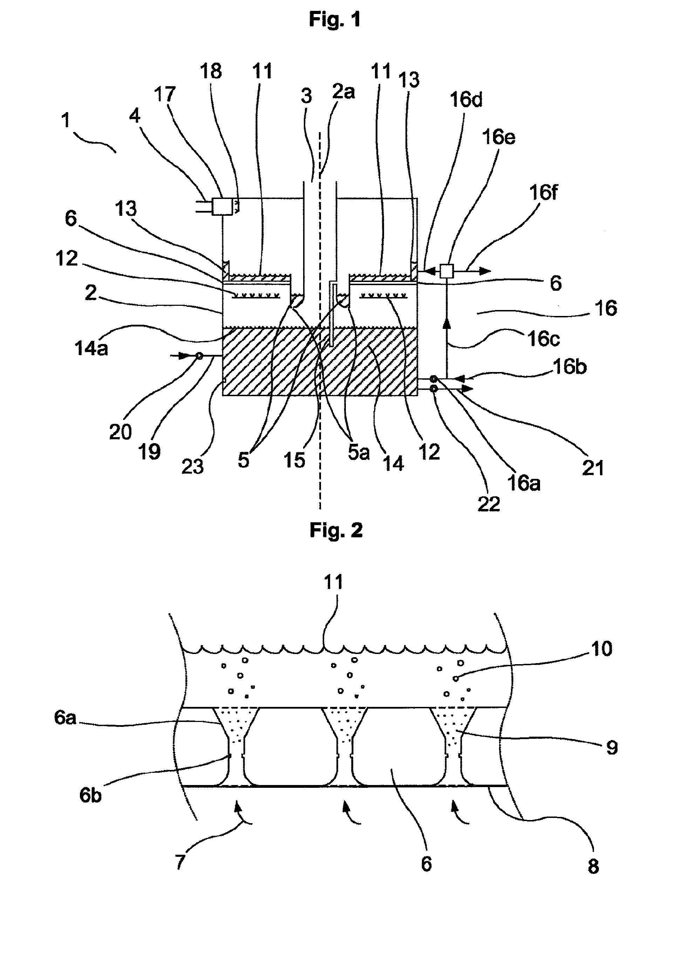

Figure 1 illustrates a device 1 according to the present invention, by the use of which a method according to the present invention advantageously can be performed. The device 1 comprises a housing 2, an inlet 3 for gas to be purified and one or several outlets 4 for purified gas. The gas, which preferably consists of flue gases from combustion of fossil fuel in an industrial burner or power plant burner, can be hot or already cooled in a previous step (not shown). The gas is added through inlet 3 using a supply device, which can be a fan device (not shown) arranged upstream or downstream of device 1, natural pressure from previous process steps or the corresponding.

The housing is preferably manufactured from a rigid material, preferably glass fiber reinforced plastic, metal or concrete with internal rubber coating. The inside of the housing is advantageously either made from plastic, gummed or executed in stainless steel, in order to withstand the chemical conditions inside the device 1.

From the inlet 3, the gas is conveyed on to and past a quenching device 5 that, via nozzles 5a, injects absorbent in the form of liquid jets that are partly reshaped into drops in the gas streaming past the jets. A certain part of the liquid evaporates as the temperature of the gas is lowered, and is conveyed in gaseous form onwards together with the gas to be purified. This will cool the gas to a desired process temperature. Suitable process temperatures after the quenching are between room temperature and 80°C, more preferably between 50°C and 70°C. Moreover, some of the drops are conveyed from the quenching device 5 in liquid phase onwards together with the gas streaming past the jets. Thus, using the quenching device both cooling and saturation is achieved of the gas streaming past, but also drop generation before the subsequent venturi step, which is described in the following.

The gas mixture is thus conveyed onwards to a venturi device 6 in the form of a plate comprising a multitude venturi tubes, arranged in the plate one next to the other and mutually parallel, in the form of through holes. The venturi device 6 is most clearly shown in figure 2, which illustrates venturi tubes 6a comprising a centrally arranged constriction in which the velocity of the gas increases, so that heavy turbulence is achieved when gas streams through the hole.

The gas thus streams 7 from below up to and in through the parallel venturi tubes 6a, at the entrance of which it brings with it liquid drops from a liquid film 8, preferably water and absorbent, arranged on the lower side of the venturi device 6. The drops contained in the gas and originating from the previous quenching, together with liquid carried from the film 8, stream with the gas through the venturi tubes 6a, and therein form very small droplets 9 of absorbent because of the heavy turbulence. Since several venturi tubes 6a are used in parallel in this way, a very large contact surface between gas and absorbent, and good dispersion of the droplets in the gas, is achieved, resulting in high yield regarding purification of the gas.

In order to further improve the capability of the venturi tubes 6a to form small droplets of the absorbent liquid, each tube 6a comprises a small shoulder 6b at the place for the constriction inside the tube 6a. The shoulder 6b is shaped as a small, abrupt projection from the inner wall of the tube 6a, advantageously in the form of a circular projection, and has the purpose of additionally increasing the turbulence of the gas streaming through the tube 6a.

In order to make sure that the film 8 does not dry up, thereby causing a risk for buildup and clogging, a wetting device 12, for example in the form of a series of spray nozzles, is arranged to continuously wet the lower side of the venturi device 6.

The upper side of the venturi device 6 supports a liquid bed 11 of moving absorbent, which is continuously filled via a filler device 13, for example in the form of a tray. The absorbent pours from the filling device 13, across the upper side of the venturi device 6 and down into a filling tray in the quenching device 5. Thus, the pouring absorbent forms the bed 11 of absorbent above the venturi device 6. At the same time the quenching device 5 is continuously replenished with absorbent, which is sprayed out through nozzles 5a.

After the mixture of gas and small droplets of absorbent have passed the venturi tubes 6a, the gas rises up through the liquid bed 11 in the form of bubbles 10. Since the stream of gas/droplet mixture out from the plurality of venturi tubes 6a is heavily turbulent, a good mixture of absorbent in the bed 11 is achieved. This guarantees a very large contact surface between absorbent and gas also in the liquid bed 11, and thereby also high yield in terms of gas purification.

The absorbent conveyed by the gas through the venturi tubes 6a remains in the liquid bed 11 and is carried with the latter towards the quenching device 5.

The absorbent which is sprayed out as liquid jets from the quenching device 5 is conveyed in part, as described above, in gaseous and liquid phase by the gas streaming past and thereafter again into and through the venturi device 6. The rest of the absorbent instead falls down and is collected in a basin 14 arranged under the quenching device 5.

An overflow device 15 is connected to the filling tray of the quenching device 5, and opens out into the basin 14, so that absorbent is led via the overflow device 15 and down into the basin in case the surface of the absorbent in the filling tray of the quenching device 5 exceedes a predetermined level. This leads to that the amount of absorbent used in the quenching device 5 can be kept at a suitable level in a simple way, even in case large amounts of absorbent are added from the bed 11.

In order to maintain the liquid level in the bed 11, the filling device 13 is continuously replenished with absorbent via a recirculation system 16 for absorbent liquid, being externally arranged in relation to the housing 2, comprising an exit conduit below the surface 14a of the basin 14. A pump 16a is arranged to pump absorbent from the basin 14, into and up through a riser pipe 16c and via an inlet conduit 16d to the filler device 13, for onwards transport to the liquid bed 11. The operation of the pump 16a is controlled, using a suitable known control device (not shown), so that a suitable liquid depth is maintained in the liquid bed 11. Alternatively, a suitable known valve device (not shown) in the filler device 13 can be controlled, using the control device, so that a suitable level is maintained in the bed 11. The control system may be connected, on the one hand, to the pump 16a and/or to the valve device, and, on the other hand, to a suitable known level meter (not shown) for liquid level in the bed 11.

It is preferred that the recirculation system 16 is designed with such capacity that all liquid in the basin 14 can be circulated about 25 times per hour.

The gas having been purified in the venturi device 6 and the liquid bed 11 then streams on to the outlet 4, via a droplet separator 17 which is conventional as such and which is wetted by a wetting device 18 similar to the wetting device 12, with the aim of avoiding buildup and clogging.

Thus, the gas streams into the housing 2 via the inlet 3, past the quenching device 5 and into a space which is downwards limited by the surface 14a, and which is essentially upwards limited by the lower side of the venturi device 6. No gas can stream past the venturi device 6 via the quenching device 5, since it is sealed by the absorbent in the filling tray.

According to the preferred embodiment illustrated in figure 1, the device is essentially circular symmetric, whereby the housing is designed in the form of a cylinder, along the central axis 2a of which the gas is brought in through the inlet 3. In other words, figure 1 is presented as a cross-section through the central axis 2a of the cylindrical housing 2. The venturi device 6 and the liquid bed 11 are hence arranged in the form of a circular symmetric ring surrounding the centrally arranged inlet conduit 3 above the round, circular symmetric basin 14. Furthermore, the housing 2, the venturi device 6, the bed 11 and the basin 14 are coaxially arranged. Such geometry will result in a number of advantages.

In addition to that the construction can be made compact and will be sturdy, the process of applying gum to the inside of the housing, in case such gum is used, is simplified in the case a cylindrical device 1 is used. Moreover, the flow of absorbent liquid and gas will be more favorable, harmful pressure gradients and sedimentation will for example not occur as much as for instance in quadratic or other geometries with corners. The filler device 13 can in a simple way be arranged essentially around the whole liquid bed, from where absorbent can flow in a symmetric manner outside in, towards one and the same circular symmetric exit constituted by the filling tray of the quenching device 5. In this way, an even and controlled flow of absorbent in the liquid bed 11 is ensured. If so is needed, several outlets 4 for purified gas can also be arranged around the envelope circumference of the housing 2.

According to a preferred embodiment, the purification device 1 is designed for purification of between about 80 000 and 1 000 000 Nm³/h gas. To this end, it is preferred that the housing 2 has an inner diameter of between 4 and 15 meters.

The distance between the quenching device 5 and the liquid surface 14a, i.e. the height of the passage through which the gas streams on its way between the inlet 3 and the space limited by the liquid surface 14a and the venturi device 6, is preferably between 20 cm and 2 meters. According to a preferred embodiment, the height of the surface of the liquid 14a is adjusted, by adding or removing absorbent using existing filling- and tapping systems, so that the height of said passage is adapted to the amount of gas to be purified per time unit. If the gas stream is decreased, an increase of the liquid level 14a is thus performed, so that the stream through the passage becomes more turbulent and so that the gas therefore brings with it the quenching liquid in a more efficient way.

When the gas is bubbled through the liquid bed 11, the latter expands, because of the space which is occupied by the gas bubbles in the liquid, so that the liquid depth in the bed 11 increases. In a non-expanded state, the depth of the liquid bed 11 is preferably about between 20 and 40 centimeters. In an expanded state, i.e. during full operation, the depth of the liquid bed is preferably about between 1 and 2 meters. This is however heavily dependent upon the desired collection efficiency, the viscosity of the absorbent and other factors. The plate of the venturi device 6 is, according to a preferred embodiment, between about 50 and 80 millimeters high, and therefore the length of the venturi tubes 6a are also equally tall. The entrances of the tubes 6a in the plate preferably cover about 15% of the bottom surface of the plate, and are preferably arranged evenly distributed across the lower side of the plate. The constriction of each venturi tube is preferably between about 10 and 30 millimeters of diameter, any shoulders 6b not counted. Preferably, the venturi device 6 comprises at least about 100, more preferably at least 500, venturi tubes 6a working in parallel.

Preferably, the plate is manufactured from a rigid and resistant material, which is also chemically resistant against the gas and the absorbent. Examples comprise rigid plastics such as polypropylene and acid-proof metals.

According to a preferred embodiment, the device 1 is used for separating sulphur dioxide from flue gases from combustion of fossil fuel, such as natural gas, oil, coal, etc. As absorbent can for this purpose absorbentbe used for instance water supplemented with lime and/or limestone, which in this case forms a slurry with comparatively high viscosity. Moreover, oxygen may be added to the absorbent, so that the sulphur dioxide finally forms gypsum (CaSO₄ · 2H₂O), which may be collected and used later, through the following reaction formulas:

CaCO₃ + SO₂ → CaSO₃ + CO₂

CaSO₃ + H₂O + ½O₂ → CaSO₄ + H₂O

According to a preferred embodiment, the absorbent in the basin 14 contains about 97-98% of solid gypsum and about 2-3% of solid limestone in powder form during operation.

In figure 1, there is illustrated a supply conduit 19 for absorbent and a pump 20 for pumping in additional absorbent in the form of for example lime and water in a suitable mixing ratio, into the basin 14. Furthermore, there is an outlet conduit 21 for the reaction products, in combination with an additional pump 22. In the case with the above described reactions, the formed gypsum is separated, and is run through a conventional hydrocyclone (not shown). Thereafter, the small gypsum crystals are brought back to the device 1, while the larger ones are taken away for further treatment.

A device 1 in accordance with the present invention is also efficient for separating particles from the gas, which particles are then also transported away via the outlet conduit 21.

A sensor device 23, which is known as such, is arranged in the basin 14 with the purpose of measuring the mass ratio between lime and gypsum in the basin 14, for example by measuring the density in the absorbent in the basin 14 and then, based thereupon, to calculate the said mass ratio. On basis of the measured density, the amount of reaction products transported away by the pump 22 is controlled. The amount of lime added is at the same time controlled so that it corresponds to the amount of sulphur separated using the device 1, which amount sulphur is established by measuring the pH in the absorbent, also using the sensor device 23. The above-mentioned control device is thus arranged to control, by regulating the pump 20, the supply of new lime and liquid to the basin 14 through the supply conduit 19, so that this mass ratio is kept at a constant level. In this way, among other things it is achieved that a change in the gas stream through, and the amount of absorbed SO₂ in, the device 1, affecting how quickly the added lime is converted, can be met so that an efficient absorption at all times can be maintained.

Said control device is also preferably arranged to control the pumps 20, 22, so that the liquid level 14a is such that the distance between the liquid level 14a and the quenching device 5 is suitable for the current stream velocity, as explained above.

It is preferred that the oxidant required to oxidize CaSO₃ to CaSO₄ according to the above reaction formula is added to the absorbent being transported in the riser pipe 16c, in which the main oxidation of CaSO₃ also takes place. Conveniently, the supply of oxygen takes place via addition of air via a supply conduit 16b at the bottom of the riser pipe 16c.

According to a very preferred embodiment, the gas which is to be purified consists of flue gases from an oxyfuel burner, and the gaseous compound contents of the liquid absorbent present in the riser pipe 16c are separated using a separation device 16e at the upper end of the riser pipe, before the absorbent is added to the bed 11, and is transported away from the device 1 via an outlet conduit 16f.

In other words, the oxidant is added to the absorbent in the recirculation device 16 at a first point at the bottom of the riser pipe 16c, and the nitrogen content in the added oxidant is led off from the absorbent at a second point, arranged higher than the first point and before the absorbent again joins the rest of the absorbent in the device 1.

Such an arrangement will secure that sufficient amounts of oxygen can be added to the absorbent during its transport upwards through the riser pipe 16c, at the same time as the contents of the added air of nitrogen, remaining oxygen and other gases that are considered pollutants under the circumstances are not allowed to enter the device 1 and there being mixed with the purified gas. Hence, in this way a cheap way is achieved of avoiding the problems with contained nitrogen in purified flue gases from oxyfuel burners during later carbon dioxide separation steps.

According to a preferred embodiment, the separation device 16e consists of a water trap through which the absorbent is caused to flow, and from the upper part of which contained nitrogen and other gases are separated.

Preferably, the device 1 is equipped with between 4 and 12 riser pipes, according to the above described, evenly distributed along the tube-shaped envelope surface of the housing 2, in order to guarantee an even flow and to avoid large concentration gradients in the absorbent.

According to the invention, the gas streams through the venturi tubes 6a downwards up, in other words against the direction of gravity. This leads to the advantage that the absorption of pollutants present in the gas to a certain extent can be made self regulating. Namely, in case the gas stream velocity decreases, the amount of absorbent will to a certain extent penetrate down, against the gas stream, into the venturi tubes 6a from the bed 11 of absorbent arranged above the venturi tubes 6a. This absorbent penetrating downwards will decrease the effective size of the constriction in each respective venturi tube 6a, thereby increasing the venturi action in the sense that the turbulence of the gas streaming there through increases, whereby the absorption can be maintained despite less gas throughput.

Using a method according to the present invention to separate sulphur dioxide from flue gases, a very good mass transfer of sulphur from the gas to the absorbent can be achieved due to a very large total contact surface between gas and absorbent in the quenching device 5, the venturi device 6 and the bed 11. Collecting efficiencies of up to 99% are generally possible to achieve, without the energy costs being higher than for conventional technology. As a comparison, it can be mentioned that conventional spray towers normally have collecting efficiencies of about 85-95%, in certain cases up to 97-98%. Moreover, it is possible to design a device according to the present invention, for carrying out such a method, in a compact and non-bulky way, and which at the same time requires a minimal supply of energy since there is no need for heating and since the energy requirements for the circulation of absorbent is limited.

Furthermore, flue gases from oxyfuel burners can be treated cheaply and reliably without nitrogen being added to the purified gas, thereby complicating subsequent carbon dioxide separation steps.

## Claims

1. Method for purifying gas, wherein several tubes (6a) are arranged next to each other in a plate (6) which is caused to comprise an upper surface, and in that the gas
in a first step is brought through the tubes (6a) in a direction against the direction of gravity; and
in a second step is bubbled through a liquid bed (11) of absorbent that is caused to be arranged on top of the upper surface **characterised in** that the tubes are venturi tubes, each comprising a respective constriction at which the velocity of the gas flowing through the respective tubes increases, as well as a respective abrupt protrusion (6b) from the inner wall of the venturi tube (6a) at the respective place for the said constriction, arranged to further increase the turbulence of the gas streaming through the respective tube.

2. Method according to claim 1, **characterised in** that the gas is caused to be quenched by adding absorbent into the gas before the gas is caused to be brought through the venturi tubes (6a).

3. Method according to claim 2, **characterised in** that the quenching is caused to take place by use of a quenching device (5) that is caused to be arranged to quench the gas using absorbent that is added from the liquid bed (11) to the quenching device (5), and in that a recirculation device (16) for absorbent is caused to be arranged to collect absorbent which has been used during the quenching and to bring this absorbent back to the liquid bed (11).

4. Method according to claim 3, **characterised in** that a part of the absorbent being added to the gas during quenching is caused to be conveyed by the gas into the venturi tubes (6a).

5. Method according to claim 3 or 4, **characterised in** that absorbent is collected in a basin (14) which is caused to be arranged below the plate (6) along the direction of gravity, and in that the gas, before it is brought through the venturi tubes (6a), is brought into a space, which along the direction of gravity downwards is caused to be limited by the surface (14a) of the collected absorbent in the basin (14) and upwards is caused to be limited by the lower side of the plate (6).

6. Method according to claim 5, **characterised in** that an overflow device is caused to convey absorbent from the liquid bed (11) to the basin (14) in case the liquid level in the liquid bed (11) exceedes a predetermined value.

7. Method according to any one of the preceding claims, **characterised in** that liquid is sprayed onto the lower side of the plate (6) using a wetting device (12), so that the lower side of the plate (6) during operation at all times is kept damp.

8. Method according to any one of the preceding claims, **characterised in** that the absorbent is caused to comprise lime and/or limestone, and in that the method is used for separating SO₂ contained in the gas, by transformation into CaSO₃ and/or CaSO₄.

9. Method according to claim 8 when dependent on claim 3, **characterised in** that an oxidant is added to the absorbent in the recirculation device (16), so that formed CaSO₃ in a subsequent reaction step is caused to oxidize to CaSO₄.

10. Method according to claim 8 or 9, **characterised in** that the gas is caused to consist of flue gases from an industrial burner or a power plant burner.

11. Device (1) for purifying gas, wherein the device (1) comprises several tubes (6a) arranged next to each other in a plate (6) comprising an upper surface, in that the device (1) also comprises a liquid bed (11) of absorbent, arranged on top of the upper surface, in that a supply means is arranged to bring the gas into the device (1), and in that the device (1) is arranged to, against the direction of gravity, firstly bring the gas through the tubes (6a) and thereafter bubble the gas through the liquid bed (11), **characterised in** that the tubes are venturi tubes, each comprising a respective constriction arranged so that the velocity of the gas flowing through the respective tubes increases at the said constriction, as well as a respective abrupt protrusion (6b) from the inner wall of the venturi tube (6a) at the respective place for the said constriction, arranged to further increase the turbulence of the gas streaming through the respective tube.

12. Device (1) according to claim 11, **characterised in** that the device (1) further comprises a quenching device (5), arranged to quench the gas by adding absorbent to the gas before the gas is brought through the venturi tubes (6a).

13. Device (1) according to claim 12, **characterised in** that the quenching device (5) is arranged to quench the gas using absorbent added from the liquid bed (11) to the quenching device (5), and in that a recirculation device (16) for absorbent is arranged to collect absorbent that has been used during the quenching and to bring back this absorbent to the liquid bed (11).

14. Device (1) according to claim 13, **characterised in** that the device (1) further comprises a basin (14) below the plate (6) along the direction of gravity, in that the basin is arranged to collect absorbent from the quenching, and in that the device (1) is arranged to convey the gas, before it is brought through the venturi tubes (6a), into a space that downwards, along the direction of gravity, is limited by the surface (14a) of the collected absorbent in the basin (14) and upwards, along the direction of gravity, is limited by the lower side of the plate (6).

15. Device (1) according to any one of claims 11-14, **characterised in** that a wetting device (12) is arranged to spray liquid onto the lower side of the plate (6), so that the lower side of the plate (6) is kept damp during operation.

## Patentansprüche

1. Verfahren zum Reinigen von Gas, wobei mehrere Rohre (6a) nebeneinander in einer Bank (6) angeordnet sind, die eine obere Oberfläche beinhaltet, und bei dem das Gas
in einem ersten Schritt durch die Rohre (6a) in eine Richtung entgegen der Richtung der Schwerkraft gebracht wird, und
in einem zweiten Schritt durch ein Flüssigkeitsbett (11) aus Absorptionsmittel geperlt wird, das an der Oberseite der oberen Oberfläche angeordnet ist, **dadurch gekennzeichnet, dass** die Rohre Venturirohre sind, wobei jedes sowohl eine entsprechende Verengung, an der die Geschwindigkeit des Gases, das durch die entsprechenden Rohre fließt, ansteigt, als auch einen entsprechenden abrupten Vorsprung (6b) von der inneren Wandung des Venturirohres (6a) am entsprechenden Ort für die Verengung beinhaltet, so angeordnet, dass die Turbulenz des Gases, das durch das entsprechende Rohr fließt, weiter ansteigt.

2. Verfahren nach Anspruch 1, **dadurch gekennzeichnet, dass** das Gas durch Hinzufügen eines Absorptionsmittels in das Gas, bevor das Gas durch die Venturirohre (6a) gebracht wird, gequencht wird.

3. Verfahren nach Anspruch 2, **dadurch gekennzeichnet, dass** das Quenchen unter Verwendung einer Quenchvorrichtung (5) stattfindet, die so angeordnet ist, dass das Gas mittels eines Absorptionsmittels, das von dem Flüssigkeitsbett (11) zur Quenchvorrichtung (5) hinzugefügt wird, gequencht wird, und dass eine Rezirkulationsvorrichtung (16) für das Absorptionsmittel so angeordnet ist, dass Absorptionsmittel, das während des Quenchens verwendet wurde, gesammelt wird und dieses Absorptionsmittel zum Flüssigkeitsbett (11) zurückgebracht wird.

4. Verfahren nach Anspruch 3, **dadurch gekennzeichnet, dass** ein Teil des Absorptionsmittels, das zum Gas während des Quenchens hinzugefügt wird, durch das Gas in die Venturirohre (6a) geleitet wird.

5. Verfahren nach Anspruch 3 oder 4, **dadurch gekennzeichnet, dass** das Absorptionsmittel in einem Becken (14) gesammelt wird, das so angeordnet ist, dass es sich unterhalb der Bank (6) entlang der Richtung der Schwerkraft befindet, und dass das Gas, bevor es durch die Venturirohre (6a) gebracht wird, in einen Raum eingebracht wird, der entlang der Richtung der Schwerkraft nach unten durch die Oberfläche (14a) des gesammelten Absorptionsmittels im Becken (14) limitiert ist und nach oben durch die Unterseite der Bank (6) limitiert ist.

6. Verfahren nach Anspruch 5, **dadurch gekennzeichnet, dass** eine Überlaufvorrichtung das Absorptionsmittel vom Flüssigkeitsbett (11) zum Becken (14) leitet, sobald der Flüssigkeitsspiegel im Flüssigkeitsbett (11) einen vorbestimmten Wert überschreitet.

7. Verfahren nach einem der vorhergehenden Ansprüche, **dadurch gekennzeichnet, dass** Flüssigkeit mittels einer Benetzungsvorrichtung (12) auf die Unterseite der Bank (6) gesprüht wird, sodass die Unterseite der Bank (6) während des Betriebs immer feucht gehalten wird.

8. Verfahren nach einem der vorhergehenden Ansprüche, **dadurch gekennzeichnet, dass** das Absorptionsmittel Kalk und/oder Kalkstein beinhaltet, und dass das Verfahren zum Trennen von SO₂, das im Gas enthalten ist, durch Umwandlung in CaSO₃ und/oder CaSO₄ verwendet wird.

9. Verfahren nach Anspruch 8, wenn abhängig von Anspruch 3, **dadurch gekennzeichnet, dass** ein Oxidationsmittel zum Absorptionsmittel in der Rezirkulationsvorrichtung (16) hinzugefügt wird, sodass gebildetes CaSO₃ in einer nachfolgenden Reaktion zu CaSO₄ oxidiert.

10. Verfahren nach Anspruch 8 oder 9, **dadurch gekennzeichnet, dass** das Gas aus Rauchgasen von einem Industriebrenner oder einem Kraftwerksbrenner besteht.

11. Vorrichtung (1) zum Reinigen von Gas, wobei die Vorrichtung (1) mehrere Rohre (6a) beinhaltet, die nebeneinander in einer Bank (6) angeordnet sind, die eine obere Oberfläche beinhaltet, wobei die Vorrichtung (1) auch ein Flüssigkeitsbett (11) aus Absorptionsmittel beinhaltet, das an der Oberseite der oberen Oberfläche angeordnet ist, wobei eine Versorgungsvorrichtung angeordnet ist, um das Gas in die Vorrichtung (1) einzubringen, und wobei die Vorrichtung (1) angeordnet ist, um, entgegen der Richtung der Schwerkraft, zuerst das Gas durch die Rohre (6a) zu bringen und danach das Gas durch das Flüssigkeitsbett (11) zu perlen, **dadurch gekennzeichnet, dass** die Rohre Venturirohre sind, wobei jedes sowohl eine entsprechende Verengung, die angeordnet ist, sodass die Geschwindigkeit des Gases, das durch die entsprechenden Rohre fließt, an der Verengung ansteigt, als auch einen entsprechenden abrupten Vorsprung (6b) von der inneren Wandung des Venturirohres (6a) am entsprechenden Ort für die Verengung beinhaltet, so angeordnet, dass die Turbulenz des Gases, das durch das entsprechende Rohr fließt, weiter ansteigt.

12. Vorrichtung (1) nach Anspruch 11, **dadurch gekennzeichnet, dass** die Vorrichtung (1) weiter eine Quenchvorrichtung (5) beinhaltet, so angeordnet, dass das Gas durch Hinzufügen eines Absorptionsmittels in das Gas, bevor das Gas durch die Venturirohre (6a) gebracht wird, gequencht wird.

13. Vorrichtung (1) nach Anspruch 12, **dadurch gekennzeichnet, dass** die Quenchvorrichtung (5) angeordnet ist, um das Gas mittels eines Absorptionsmittels, das von dem Flüssigkeitsbett (11) zur Quenchvorrichtung (5) hinzugefügt wird, zu quenchen, und dass eine Rezirkulationsvorrichtung (16) für das Absorptionsmittel angeordnet ist, um das Absorptionsmittel, das während des Quenchens verwendet wurde, zu sammeln und dieses Absorptionsmittel zum Flüssigkeitsbett (11) zurückzubringen.

14. Vorrichtung (1) nach Anspruch 13, **dadurch gekennzeichnet, dass** die Vorrichtung (1) weiter ein Becken (14) unterhalb der Bank (6) entlang der Richtung der Schwerkraft beinhaltet, dass das Becken (14) angeordnet ist, um Absorptionsmittel vom Quenchen zu sammeln, und dass die Vorrichtung (1) angeordnet ist, um das Gas, bevor es durch die Venturirohre (6a) gebracht wird, in einen Raum einzuleiten, der nach unten, entlang der Richtung der Schwerkraft, durch die Oberfläche (14a) des gesammelten Absorptionsmittels im Becken (14) limitiert ist und nach oben, entlang der Richtung der Schwerkraft, durch die Unterseite der Bank (6) limitiert ist.

15. Vorrichtung (1) nach einem der Ansprüche 11-14, **dadurch gekennzeichnet, dass** eine Benetzungsvorrichtung (12) angeordnet ist, um Flüssigkeit auf die Unterseite der Bank (6) zu sprühen, sodass die Unterseite der Bank (6) während des Betriebs feucht gehalten wird.

## Revendications

1. Procédé de purification du gaz, où plusieurs tubes (6a) sont disposés côté à côte dans une plaque (6) qui va alors comprendre une surface supérieure, et en ce que le gaz dans un premier temps va passer à travers les tubes (6a) en sens inverse de la gravité ; et
dans un second temps le gaz est mis en barbotage à travers un lit fluidisé (11) d'absorbant qui sera disposé au-dessus de la surface supérieure, **caractérisé en** ce que les tubes sont des tubes venturi, chacun comprenant un resserrement respectif auquel la vélocité du gaz s'écoulant à travers les tubes respectifs augmente, de même qu'une protubérance (6b) abrupte respective à partir de la paroi interne du tube venturi (6a) à l'endroit respectif pour ledit resserrement, disposée pour augmenter davantage la turbulence du gaz s'écoulant à travers le tube respectif.

2. Procédé selon la revendication 1, **caractérisé en** ce que le gaz va être étanché en ajoutant de l'absorbant dans le gaz avant de le faire passer à travers les tubes venturi (6a).

3. Procédé selon la revendication 2, **caractérisé en** ce que l'étanchement va s'effectuer à l'aide d'un dispositif d'étanchement (5) qui sera disposé pour étancher le gaz à l'aide d'un absorbant que l'on ajoute du lit fluidisé (11) vers le dispositif d'étanchement (5), et en ce qu'un dispositif de recirculation (16) pour absorbant sera disposé pour récupérer l'absorbant que l'on a utilisé pendant l'étanchement et pour ramener cet absorbant dans la lit fluidisé (11).

4. Procédé selon la revendication 3, **caractérisé** en ce qu'une partie de l'absorbant ajouté au gaz pendant l'étanchement sera acheminé par le gaz dans les tubes venturi (6a).

5. Procédé selon la revendication 3 ou 4, **caractérisé en** ce que l'absorbant est récupéré dans un bassin (14) qui sera disposé au-dessous de la plaque (6) dans le sens de la gravité, et en ce que le gaz, avant de passer à travers les tubes venturi (6a), est acheminé dans un espace, qui dans le sens de la gravité vers le bas, sera limité par la surface (14a) de l'absorbant récupéré dans le bassin (14) et dans le sens de gravité exercée vers le haut, sera limité par le côté inférieur de la plaque (6).

6. Procédé selon la revendication 5, **caractérisé** en ce qu'un dispositif de débordement va acheminer l'absorbant du lit fluidisé (11) vers le bassin (14) si le niveau de liquide dans le lit fluidisé (11) dépasse une valeur prédéterminée.

7. Procédé selon l'une quelconque des revendications précédentes, **caractérisé en** ce que l'on pulvérise le liquide sur le côté inférieur de la plaque (6) à l'aide d'un dispositif d'humectage (12) de sorte que le côté inférieur de la plaque (6) pendant l'opération à tout moment reste humide.

8. Procédé selon l'une quelconque des revendications précédentes, **caractérisé en** ce que l'absorbant va comprendre de la chaux et/ou du calcaire et en ce que l'on utilise le procédé pour séparer le SO₂ contenu dans le gaz, en le transformant en CaSO₃ et/ou CaSO₄.

9. Procédé selon la revendication 8, en fonction de la revendication 3, **caractérisé en** ce que l'on ajoute un oxydant à l'absorbant au dispositif de recirculation (16) de sorte que le CaSO₃ formé dans une phase de réaction subséquente va s'oxyder en CaSO₄.

10. Procédé selon la revendication 8 ou 9, **caractérisé ce** que le gaz va consister de gaz de carneau provenant d'un brûleur industriel ou d'un brûleur de centrale électrique.

11. Dispositif (1) pour la purification de gaz, où le dispositif (1) comprend plusieurs tubes (6a) sont disposés côté à côte dans une plaque (6) comprenant une surface supérieure, en ce que le dispositif (1) comprend également un lit fluidisé (11) d'absorbant, disposé en haut de la surface supérieure, en ce qu'un moyen d'alimentation est prévu pour acheminer le gaz dans le dispositif (1), et en ce que le dispositif (1) est configuré pour, en inverse de la gravité, pour faire passer le gaz à travers les tubes (6a) et ainsi mettre en barbotage à travers le lit fluidisé (11), **caractérisé en** ce que les tubes sont des tubes venturi, chacun comprenant un resserrement respectif configuré de sorte que la vélocité du gaz s'écoulant à travers les tubes respectifs augmente au niveau dudit resserrement, de même qu'une protubérance (6b) abrupte respective à partir de la paroi interne du tube venturi (6a) à l'endroit respectif pour ledit resserrement, disposée pour augmenter davantage la turbulence du gaz s'écoulant à travers le tube respectif.

12. Dispositif (1) selon la revendication 11, **caractérisé en** ce que le dispositif (1) comprend un dispositif d'étanchement (5), configuré pour étancher le gaz en ajoutant de l'absorbant dans le gaz avant de le faire passer à travers les tubes venturi (6a) .

13. Dispositif (1) selon la revendication 12, **caractérisé en** ce que le dispositif d'étanchement (5) est aménagé pour étancher le gaz à l'aide d'un absorbant que l'on ajoute du lit fluidisé (11) vers le dispositif d'étanchement (5), et en ce qu'un dispositif de recirculation (16) pour absorbant sera disposé pour récupérer l'absorbant que l'on a utilisé pendant l'étanchement et pour ramener cet absorbant dans la lit fluidisé (11).

14. Dispositif (1) selon la revendication 13, **caractérisé en** ce que le dispositif (1) comprend en outre un bassin (14) au-dessous de la plaque (6) dans le sens de la gravité, en ce que le bassin est configuré pour récupérer l'absorbant de l'opération d'étanchement, et en ce que le dispositif (1) est configuré pour acheminer le gaz, avant de le faire passer à travers les tubes venturi (6a), dans un espace qui vers le bas, dans le sens de la gravité, est limité par la surface (14a) de l'absorbant récupéré dans le bassin (14) et vers le haut, dans le sens de gravité, est limité par le côté inférieur de la plaque (6).

15. Dispositif (1) selon l'une des revendications 11 à 14, **caractérisé en** ce que l'on pulvérise le liquide sur le côté inférieur de la plaque (6) à l'aide d'un dispositif d'humectage (12), de sorte que le côté inférieur de la plaque (6) est maintenu humide pendant l'opération.
